# EUROPEAN PATENT SPECIFICATION

(11) **EP 3 044 524 B1**
(45) Date of publication and mention of the grant of the patent: **21.11.2018**
(21) Application number: 14761837.5
(22) Date of filing: 09.09.2014
(51) Int. Cl.: F25C 5/10, F25B 47/02

(54) **ICE PRODUCTION PLANT**
EISPRODUKTIONSANLAGE
INSTALLATION DE PRODUCTION DE GLACE

(30) Priority: 13.09.2013 IT MI20131519
(43) Date of publication of application: 20.07.2016
(73) Proprietor: Scotsman Ice S.r.L., 20010 Pogliano Milanese (MI) (IT)
(72) Inventor: ROMAGNOLI, Guido, I-20162 Milano (IT)
(74) Representative: Rapisardi, Mariacristina
(86) International application number: PCT/EP2014/069136
(87) International publication number: WO 2015/036381

(56) References cited:
- FR-A1- 2 393 248
- GB-A- 1 239 187
- US-A- 5 704 221
- US-B1- 6 449 967

## Description

The present invention relates to an ice production plant.

### KNOWN ART

There have been on the market for some time modular ice production plants which usually comprise a suction tube for conveying refrigerant fluid to a condensing unit equipped with a compressor and a condenser. A delivery tube for the refrigerant fluid runs from the condensing unit to the ice makers. Each ice maker has an expansion device and an evaporator. The expansion device is connected to a thermostatic valve suitable for maintaining optimum pressure in the ice maker during the evaporation phase. In the condensing unit between the compressor and the condenser is the tubing for defrosting the evaporators to enable the removal of the ice which has been produced in the ice makers. Lamination means, furthermore, for the refrigerant fluid are provided on the delivery tube downstream of the condensing unit and in the ice makers before the expansion device for the refrigerant fluid and on the defrosting tubing before the evaporator.

Normally, furthermore, the ice makers of these modular plants of known type are arranged spaced apart from each other to allow access from the side or from above to the electrical, mechanical and hydraulic parts, for their maintenance or repair.

GB 1 239 187 A discloses a refrigeration cycle according to the preamble of claim 1.

US 6449967 discloses a high speed evaporator defrost system by hot gas.

### DISADVANTAGES OF THE KNOWN ART

Modular ice production plants of known type have the ice makers with their electrical, mechanical and hydraulic components accessible from the side or from above, employing a considerable amount of space.

These traditional modular ice production plants notoriously entail that when an ice maker goes into defrosting, there is a drop in pressure at the condenser due to the effect of the leakage of hot gas upstream thereof.

In these plants of known type, furthermore, it is common to have liquid returning to the compressor with consequent damage thereto. These plants, furthermore, have a fairly low efficiency since during defrosting there is a decline and fluctuation in the delivery pressure. This fall in pressure on the delivery side brings about a change in the temperature of evaporation with the formation of "white" layers or of haloes in the ice, considerably impairing the visual qualities of the ice, for example in cubes.

Not the least of the disadvantages in these plants of known type, the condensed and cold outgoing refrigerant fluid from the evaporator during the defrosting cycle is not reused.

### TECHNICAL TASK OF THE INVENTION

The technical task which is proposed for the present invention is, therefore, to create an ice production plant which makes it possible to eliminate the technical drawbacks complained of in the known art.

### OBJECTS OF THE INVENTION

Within the scope of this technical task, an object of the invention is to create an ice production plant which has a notable degree of efficiency with considerable energy savings and makes it possible to keep the pressure high and constant even during the hot gas defrosting cycle.

Another object of the invention is to create an ice production plant which avoids the return of liquid to the compressor, with the elimination of the risk of damage.

It is also an object of the invention to create an ice production plant which increases the efficiency of the system by reusing the condensed and cold refrigerant fluid which feeds the other machines in a refrigeration cycle.It is a further object of the invention to create an ice production plant which ensures an optimum defrosting cycle.

Not the least object of the invention is to create an ice production plant which gives the possibility of stacking and placing alongside each other several ice makers with a reduction in installation spaces and easy access to the parts which need maintenance.

The technical task, as well as these and other objects according to the present invention are achieved by creating a plant according to claim 1.

The present invention also relates to a control procedure for the ice production plant, characterised by having the outgoing refrigerant fluid from said evaporator return, during the defrosting cycle, to a liquid receiver downstream of said condensing unit so as to reuse it for the ice makers in a refrigeration cycle and avoid it returning to the compressor of said condensing unit.

Other characteristics of the present invention are also defined in the claims subsequent to the independent claims.

Further characteristics and advantages of the invention will more fully emerge from the description of a preferred but not exclusive embodiment of the ice production plant according to the invention, illustrated by way of non-limiting indication in the accompanying drawings, in which:

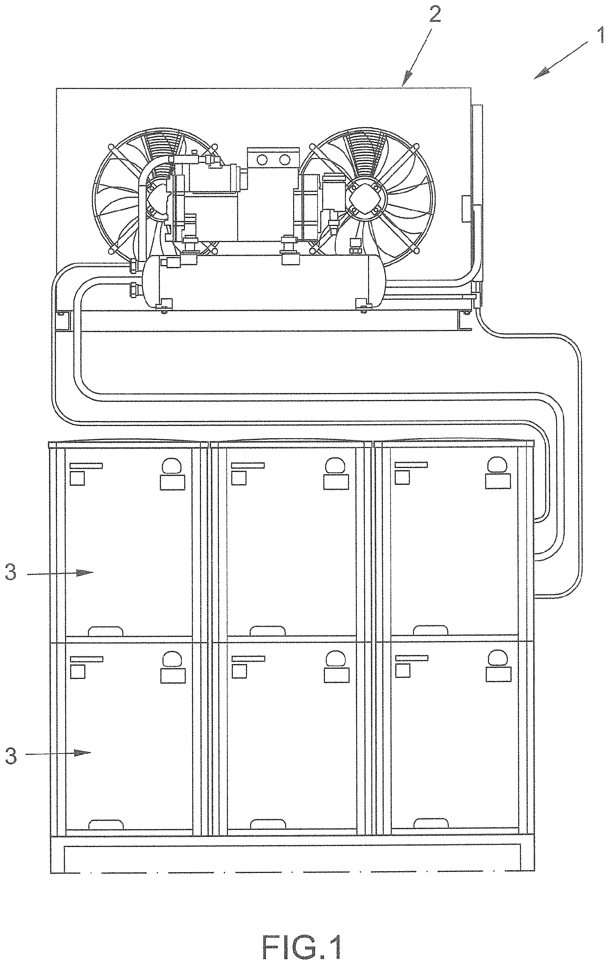

- figure 1 is a view in schematic frontal elevation of the plant according to the invention.

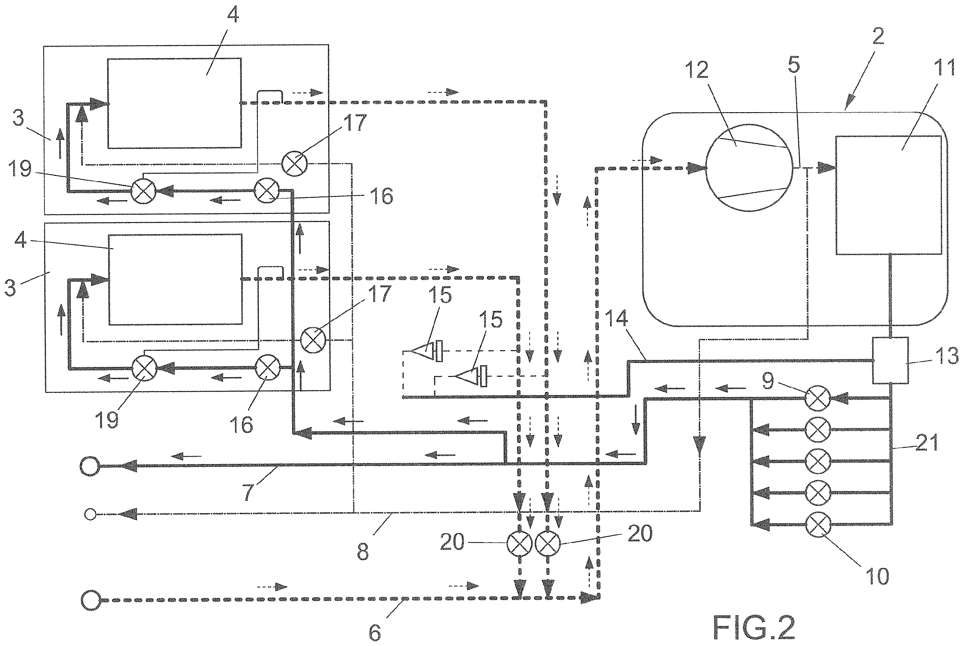

- figure 2 shows the operating scheme of the refrigeration cycle of the ice production plant according to the invention wherein the solenoid valve downstream of the condensing unit is open.

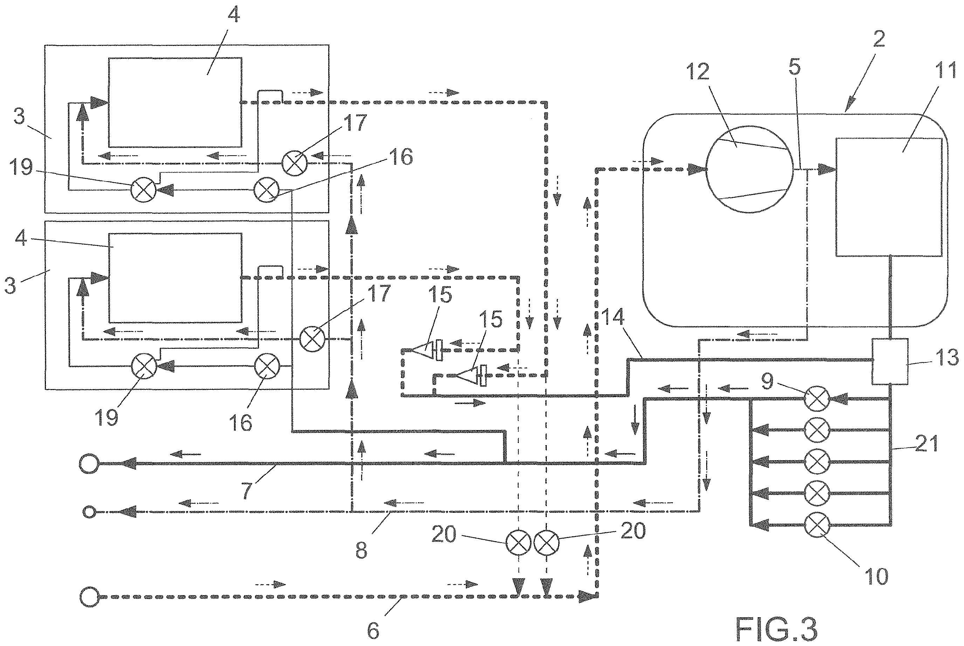

- figure 3 shows the operating scheme of the refrigeration cycle of the ice production plant according to the invention wherein the solenoid valve downstream of the condensing unit is closed during the defrosting cycle.

With reference to the figures mentioned, the ice production plant is indicated comprehensively with the reference number 1.

The plant 1 comprises at least one condensing unit 2 for supplying refrigerant fluid to at least two ice makers 3 each having evaporation means 4 for said fluid.

In the condensing unit 2 there is a bypass 5 for activating a hot gas defrosting cycle for the evaporation means 4 for removing from the latter the ice which has been produced. Preferably the plant concerns the production of ice in cubes.

A suction conduit 6 conveys the refrigerant fluid to the condensing unit, a delivery conduit 7 conveys the refrigerant fluid from the condensing unit 2 to the ice makers 3 while a defrosting conduit 8 conveys the refrigerant fluid from the bypass 5 directly to the evaporators 4.

In particular, the plant has shutoff means for the refrigerant fluid coming from the condensing unit and regulation means for the pressure of the refrigerant fluid.

The shutoff means comprise a first solenoid valve 9 which controls the opening and closing of the delivery conduit 7 for conveying the refrigerant fluid from the condensing unit 2 to the ice makers 3.

Opportunely the delivery conduit has a constant diameter upstream and downstream of the solenoid valve 9.

The regulating means comprise at least one regulating valve 10 for the pressure of the refrigerant fluid conveyed by at least one auxiliary conduit 21 positioned between the condensing unit 2 and the ice makers 3.

Each regulating valve 10 preferably supplies four ice makers 3.

Consequently in the case of a plant with ice makers 3 there will be present a first solenoid valve 9 and four regulating valves 10.

Advantageously the sum of the sections of the auxiliary conduits 21 is equivalent to the section of the delivery conduit 7, to ensure the same refrigerant fluid flow to the ice makers when the first solenoid valve 9 is closed during the hot gas defrosting cycle.

The first solenoid valve 9 and the regulating valves 10 are activated alternately to increase the production of ice for a given electricity consumption.

In fact, the regulating valves 10 positioned downstream of the condensing unit (the number of valves, as we have seen, varies according to the number of ice makers installed in series, two ice makers minimum, no maximum limit) maintain a minimum determined pressure P to the delivery line 7 (liquid) to the ice makers 3.

The regulating valves 10 in particular can be in the form of valves precalibrated for opening when a pre-established intervention threshold pressure is reached.

In the event of the use of mechanical valves, these are positioned in parallel to each other and to the first solenoid valve 9 which closes, diverting the refrigerant fluid to the regulating valves 10 when even only one ice maker begins the defrosting cycle.

In the event of the use of electronic/servo-controlled valves, the use of the solenoid shutoff valve is not necessary, since, by means of sensors or other pressure reading devices, it is possible to independently modulate the opening/closing to guarantee the pressure P defined above.

When an ice maker goes into defrosting, there is a fall in pressure at the condenser 11 due to the effect of the leakage of refrigerant fluid through the bypass 5 upstream of the condenser. The use of pressure regulating valves 10, which maintain a constant pressure during the operation of the various ice makers 3, makes it possible to have constant condensation, pressures and temperatures and consequently constant evaporation with the formation of ice of better quality.

In fact, in plants of known type, it normally occurs that during the inversion of cycle of one of the installed ice makers, the consequent fall in pressure in the delivery conduit, due to the imbalance of pressures induced, brings a change in temperature of evaporation with the formation of "white" layers or haloes in the ice, impairing the visual quality of the cube.

Furthermore, plants of known type have condensation that is not constant, which has the effect of lengthening the refrigeration times with consequent loss of output.

As we have seen, therefore, the use of a first solenoid valve 9 and of the regulating valves 10 makes it possible to obtain, for a given electricity consumption, an increase in daily production of ice.

The plant according to the invention also comprises a receiving device 13 for refrigerant fluid, positioned downstream of the condensing unit 2 and upstream of the shutoff and regulating valves 9 and 10.

The receiving device 13 comprises a supplementary tube 14 for conveying outgoing refrigerant fluid in the gaseous and liquid state from the evaporators 4 of the ice makers 3 during defrosting.

In the delivery conduit 7, there are also positioned two second solenoid valves 16 before the expansion devices 19.

The plant comprises furthermore one or more non-return valves 15, which are combined with one or more second solenoid valves 17, for the return of the refrigerant fluid in the gaseous and liquid state to the receiving device 13 during defrosting.

More precisely the valves 20 in combination with the valves 15 force the return of the gas/liquid to the receiving device 13.

The use of the receiving device 13 and of the supplementary tube 14 and of the non-return valves 15 in the ice production plant permit the return of the refrigerant fluid in the gas/liquid state, outgoing from the evaporators 4 during the inversion of the refrigeration cycle, to the liquid receiver 13 downstream of the condenser 11 so as to avoid the return of liquid to the compressor 12, with the elimination of the risk of damage due to the presence of incompressibles.

At the same time the efficiency of the system is increased by reusing condensed and cold refrigerant fluid which goes to supply the other ice makers which are in refrigeration cycle.

From technical tests the increase in efficiency can be estimated at 10-15% of higher output or reduction in energy consumption compared with plants of known type.

The above technical solution, furthermore, makes it possible to keep the delivery pressure high and constant even during the period of imbalance of pressures during the defrosting cycle.

Not least, the first solenoid valve 9 which is closed during the defrosting cycle, not supplying the expansion devices 19, ensures a cycle of optimum defrosting.

Opportunely, furthermore, the condensing unit 2 has one or more compressors 12 in relation to the refrigerating power required to supply the ice makers 3.

One of the compressors 12 is advantageously provided with an inverter for regulating and/or modulating the refrigerating power in order to minimise the power peaks due to restarting from the end of the defrosting cycle and/or from the entry into defrosting of one or more ice makers.

This achievement allows a consequent reduction in electricity consumption of at least 5% and keeping the refrigeration requirement equal to what is required by the ice makers 3, with advantages for the quality of ice formed.

The ice makers 3 comprise their essential operating components arranged inside them to allow them to be positioned one above the other and side by side with each other, in any number, to reduce installation space.

This is possible thanks to the fact that the components (pump, evaporator, electronic board, solenoid valves, non-return valve, water solenoid valves, ice conveyor) have been arranged inside the ice maker 3 so as to permit stackability, vertically and side by side, of several ice makers, so as to reduce installation space while allowing access to the electrical, mechanical and hydraulic parts from front and rear for maintenance and repair operations.

The operation of the ice production plant, according to the invention, appears already evident from the description and illustration given. In particular when an ice maker 3 goes into defrosting, the first solenoid shutoff valve 9 closes and the regulating valves 10 open.

At the same time the second solenoid valves 16 also close upstream of the expansion device 19 while the second solenoid valves 17 open upstream of the evaporator 4.

The fall in pressure at the condenser 11, due to the effect of the leakage of refrigerant fluid upstream of the condenser is automatically compensated for by the opening of the pressure regulating valves 10, which maintain constant pressure during the operation of the various ice makers 3.

Modifications and variants, in addition to those which have been spoken of, are naturally possible: thus, for example, servo controlled or electronic valves can be used instead of mechanical valves.

It has been established in practice that the ice production plant according to the invention is particularly advantageous for keeping the delivery pressure high and constant even during the period of imbalance of pressures during the defrosting cycle.

The process as conceived herein is susceptible of numerous modifications and variants, all falling within the scope of the inventive concept as in the appended claims.

The materials used, as well as the dimensions, may in practice be of any type according to requirements and the state of the art.

## Claims

1. An ice production plant comprising at least one condensing unit (2) for the supply of refrigerant fluid to at least two ice makers (3), each having evaporation means (4) for said fluid, a bypass (5) to subject said evaporation means (4) to a hot gas defrosting cycle, comprising shutoff means (9, 16) for said refrigerant fluid coming from said condensing unit (2) and regulating means (10) for the pressure of said refrigerant fluid, and by comprising a receiving device (13) for said refrigerant fluid, positioned downstream of said condensing unit (2) and upstream of said shutoff means (9) and regulation means (10), **characterized in that** said receiving device (13) comprises a supplementary tube (14) conveying to said receiving device (13) said refrigerant fluid in the gaseous and liquid state outgoing from said evaporators (4) of said ice makers (3) during said hot gas defrosting cycle.

2. The plant according to claim 1, **characterised in that** said shutoff means and said regulating means are activated alternately.

3. The plant according to any previous claim, **characterised in that** said shutoff means comprise a first solenoid valve (9, 16) for opening and closing a delivery conduit (7) for conveying said refrigerant fluid from said condensing unit (2) to said ice makers (3), said delivery conduit (7) having a constant diameter upstream and downstream of said first solenoid valve (9).

4. The plant according to any previous claim, **characterised in that** said regulation means (10) comprise, for at least every two of said ice makers (3), a pressure regulating valve (10) for said refrigerant fluid conveyed by at least one auxiliary conduit (21) between said condensing unit and said ice makers (3), the sum of the cross-sections of said auxiliary conduits (21) being equivalent to the cross-section of said delivery conduit (7), so as to guarantee the same flow rate of said refrigerant fluid to said ice makers (3) when said first solenoid valve (9) is closed during said hot gas defrosting cycle.

5. The plant according to any previous claim, **characterised by** comprising at least one non-return valve (15) combined with at least one second solenoid valve (20) for the return of said refrigerant fluid in the gaseous and liquid state to said receiving device (13) during said hot gas defrosting cycle.

6. The plant according to any previous claim, **characterised in that** said condensing unit (2) has one or more compressors (12) in relation to the refrigerating power required to supply said ice makers (3), at least one of said compressors (12) being provided with an inverter to regulate and/or modulate said refrigerating power.

7. The plant according to any previous claim, **characterised in that** said ice makers (3) comprise their essential operating components arranged inside them to allow them to be positioned one above the other and one alongside the other in any number, to reduce installation space, said ice makers 3 having their electrical, mechanical and hydraulic parts completely accessible at the front and back in order to enable routine and extraordinary maintenance operations even if they are stacked and positioned alongside each other.

8. A control procedure for an ice production plant, **characterised by** providing an ice production plant according to claims 1-7 wherein the outgoing refrigerant fluid from said evaporator (4) returns, during said hot gas defrosting cycle, to said liquid receiver (13) so as to be reused for the other ice makers (3) which are in the refrigeration cycle and avoid it returning to the compressor (12) of said condensing unit (2).

9. The procedure according to claim 8, **characterised in that** it reuses said refrigerant fluid to maintain constant delivery pressure to said ice makers (3), even in the presence of pressure imbalances during said hot gas defrosting cycle.

10. The procedure according to claim 8, **characterised by** modulating the refrigerating power of said condensing unit (2) by means of at least one compressor (12) with inverter to minimise the power peaks caused by restarting at the end of said hot gas defrosting cycle and/or by the start of said hot gas defrosting cycle of one or more of said ice makers.

## Patentansprüche

1. Eisproduktionsanlage umfassend mindestens eine Kondensationseinheit (2) zur Versorgung von Kältemittelfluid zu mindestens zwei Eisbereitern (3), die jeweils Verdampfungsmittel (4) für das Fluid aufweisen, einen Bypass (5), um die Verdampfungsmittel (4) einem Heißgasabtauzyklus zu unterwerfen, umfassend Absperrmittel (9, 16) für das von der Kondensationseinheit (2) kommende Kältemittelfluid und Regelmittel (10) für den Druck des Kältemittelfluids, und umfassend eine Aufnahmevorrichtung (13) für das Kältemittelfluid, das stromabwärts der Kondensationseinheit (2) und stromaufwärts der Absperrmittel (9) und der Regelmittel (10) positioniert ist, **dadurch gekennzeichnet, dass** die Aufnahmevorrichtung (13) ein zusätzliches Rohr (14) umfasst, das das Kältemittelfluid im gasförmigen und flüssigen Zustand, das aus den Verdampfern (4) der Eisbereiter (3) während des Heißgasabtauzyklus austritt, zu der Aufnahmevorrichtung (13) befördert.

2. Anlage nach Anspruch 1, **dadurch gekennzeichnet, dass** die Absperrmittel und die Regelmittel abwechselnd aktiviert werden.

3. Anlage nach einem der vorhergehenden Ansprüche, **dadurch gekennzeichnet, dass** die Absperrmittel ein erstes Magnetventil (9, 16) zum Öffnen und Schließen einer Einspeisungsleitung (7) zum Befördern des Kältemittelfluids von der Kondensationseinheit (2) zu den Eisbereitern (3) umfassen, wobei die Einspeisungsleitung (7) einen konstanten Durchmesser stromaufwärts und stromabwärts des ersten Magnetventils (9) aufweist.

4. Anlage nach einem der vorhergehenden Ansprüche, **dadurch gekennzeichnet, dass** die Regelmittel (10) für mindestens alle zwei der Eisbereiter (3) ein Druckregelventil (10) für das Kältemittelfluid umfassen, das von mindestens einer Hilfsleitung (21) zwischen der Kondensationseinheit und den Eisbereitern (3) befördert wird, wobei die Summe der Querschnitte der Hilfsleitungen (21) dem Querschnitt der Einspeisungsleitung (7) entspricht, um den gleichen Durchfluss des Kältemittelfluids zu den Eisbereitern (3) zu gewährleisten, wenn das erste Magnetventil (9) während des Heißgasabtauzyklus geschlossen ist.

5. Anlage nach einem der vorhergehenden Ansprüche, **dadurch gekennzeichnet, dass** sie mindestens ein Rückschlagventil (15) in Kombination mit mindestens einem zweiten Magnetventil (20) für die Rückführung des Kältemittelfluids im gasförmigen und flüssigen Zustand zu der Aufnahmevorrichtung (13) während des Heißgasabtauzyklus umfasst.

6. Anlage nach einem der vorhergehenden Ansprüche, **dadurch gekennzeichnet, dass** die Kondensationseinheit (2) einen oder mehrere Kompressoren (12) in Bezug auf die Kälteleistung aufweist, die zur Versorgung der Eisbereiter (3) erforderlich ist, wobei mindestens einer der Kompressoren (12) mit einem Wechselrichter zum Regeln und/oder Modulieren der Kälteleistung versehen ist.

7. Anlage nach einem der vorhergehenden Ansprüche, **dadurch gekennzeichnet, dass** die Eisbereiter (3) ihre wesentlichen Betriebskomponenten umfassen, die in ihnen angeordnet sind, um ihnen zu ermöglichen, übereinander und nebeneinander in einer beliebigen Anzahl positioniert zu werden, um den Bauraum zu reduzieren, wobei die Eisbereiter 3 über ihre elektrischen, mechanischen und hydraulischen Teile vorne und hinten vollständig zugänglich sind, um routinemäßige und außergewöhnliche Wartungsarbeiten zu ermöglichen, selbst wenn sie gestapelt und nebeneinander positioniert sind.

8. Steuerverfahren für eine Eisproduktionsanlage, **gekennzeichnet durch** das Bereitstellen einer Eisproduktionsanlage nach den Ansprüchen 1-7, wobei das aus dem Verdampfer (4) austretende Kältemittelfluid während des Heißgasabtauzyklus in den Flüssigkeitsaufnahmebehälter (13) zurückkehrt, um für die anderen Eisbereiter (3), die sich im Kältezyklus befinden, wiederverwendet zu werden und um zu vermeiden, dass es zum Kompressor (12) der Kondensationseinheit (2) zurückkehrt.

9. Verfahren nach Anspruch 8, **dadurch gekennzeichnet, dass** es das Kältemittelfluid wiederverwendet, um den Förderdruck zu den Eisbereitern (3) auch bei Vorhandensein von Druckungleichgewichten während des Heißgasabtauzyklus konstant zu behalten.

10. Verfahren nach Anspruch 8, **gekennzeichnet durch** Modulieren der Kälteleistung der Kondensationseinheit (2) mittels mindestens eines Kompressors (12) mit Wechselrichter, um die Leistungsspitzen zu minimieren, die durch einen Neustart am Ende des Heißgasabtauzyklus und/oder durch den Start des Heißgasabtauzyklus eines oder mehrerer Eisbereiter verursacht werden.

## Revendications

1. Installation de production de glace comprenant au moins une unité réfrigérante (2) destinée à l'alimentation d'un fluide réfrigérant à au moins deux générateurs de glace (3), chacun comportant des moyens d'évaporation (4) pour ledit fluide, une dérivation (5) pour soumettre lesdits moyens d'évaporation (4) à un cycle de dégivrage par gaz chauds, comprenant des moyens d'arrêt (9, 16) pour ledit fluide réfrigérant provenant de ladite unité réfrigérante (2) et des moyens de réglage (10) pour la pression dudit fluide réfrigérant, et comprenant un dispositif de réception (13), pour ledit fluide réfrigérant, positionné en aval de ladite unité réfrigérante (2) et en amont desdits moyens d'arrêt (9) et moyens de réglage (10), **caractérisée en ce que** ledit dispositif de réception (13) comprend un tuyau supplémentaire (14) acheminant au dit dispositif de réception (13) ledit fluide réfrigérant à l'état gazeux et liquide sortant desdits évaporateurs (4) desdits générateurs de glace (3) pendant ledit cycle de dégivrage par gaz chauds.

2. Installation selon la revendication 1, **caractérisée en ce que** lesdits moyens d'arrêt et lesdits moyens de réglage sont activés alternativement.

3. Installation selon l'une quelconque des revendications précédentes, **caractérisée en ce que** lesdits moyens d'arrêt comprennent une première électrovanne (9, 16) servant à ouvrir et à fermer un conduit de distribution (7) pour acheminer ledit fluide réfrigérant de ladite unité réfrigérante (2) auxdits générateurs de glace (3), ledit conduit de distribution (7) comportant un diamètre constant en aval et en amont de ladite première électrovanne (9) .

4. Installation selon l'une quelconque des revendications précédentes, **caractérisée en ce que** lesdits moyens de réglage (10) comprennent, pour au moins tous les deux générateurs de glace (3), un régulateur de pression (10) pour ledit fluide réfrigérant acheminé par au moins un conduit (21) auxiliaire entre ladite unité réfrigérante et lesdits générateurs de glace (3), la somme des sections transversales desdits conduits (21) auxiliaires étant identique à la section transversale dudit conduit de distribution (7) de sorte à garantir le même débit dudit fluide réfrigérant auxdits générateurs de glace (3) lorsque ladite première électrovanne (9) est fermée pendant ledit cycle de dégivrage par gaz chauds.

5. Installation selon l'une quelconque des revendications précédentes, **caractérisée en ce qu'**elle comprend au moins un clapet de non-retour (15) combiné à au moins une seconde électrovanne (20) pour le retour dudit fluide réfrigérant à l'état gazeux et liquide au dit dispositif de réception (13) pendant le cycle de dégivrage par gaz chauds.

6. Installation selon l'une quelconque des revendications précédentes, **caractérisée en ce que** ladite unité réfrigérante (2) comporte un ou plusieurs compresseurs (12) selon la puissance de réfrigération requise pour alimenter lesdits générateurs de glace (3), au moins un desdits compresseurs (12) étant pourvu d'un onduleur pour régler et/ou moduler ladite puissance de réfrigération.

7. Installation selon l'une quelconque des revendications précédentes, **caractérisée en ce que** lesdits générateurs de glace (3) comprennent leurs composants de fonctionnement principaux disposés en leur sein pour leur permettre d'être positionnés l'un sur l'autre et l'un à côté de l'autre, quelque soit leur nombre, pour réduire l'espace de l'installation, lesdits générateurs de glace (3) ayant leurs pièces électriques, mécaniques et hydrauliques complètement accessibles à l'avant et à l'arrière afin de permettre des opérations de maintenance ordinaire et extraordinaire même lorsqu'ils sont superposés et positionnés l'un à côté de l'autre.

8. Procédure de contrôle d'une installation de production de glace **caractérisée par** la fourniture d'une installation de production de glace selon les revendications 1-7 dans laquelle le fluide réfrigérant sortant dudit évaporateur (4) retourne, pendant le cycle de dégivrage par gaz chauds, au dit récepteur de liquide (13) de sorte à être réutilisé pour les autres générateurs de glace (3) étant dans le cycle de réfrigération et à l'empêcher de retourner vers le compresseur (12) de ladite unité réfrigérante (2).

9. Procédure selon la revendication 8, **caractérisée en ce qu'**elle réutilise ledit fluide réfrigérant pour maintenir une pression de distribution constante vers lesdits générateurs de glace (3), même en présence de déséquilibres de pression pendant ledit cycle de dégivrage par gaz chauds.

10. Procédure selon la revendication 8, **caractérisée par** la modulation de la puissance réfrigérante de ladite unité réfrigérante (2) au moyen au moins d'un compresseur (12) à onduleur pour minimiser les pointes de puissance provoquées par le redémarrage à la fin dudit cycle de dégivrage par gaz chauds et/ou par le démarrage dudit cycle de dégivrage par gaz chauds d'un ou plusieurs desdits générateurs de glace.
